**Europäisches Patentamt**

**European Patent Office**

**Office européen des brevets**

(19)

(11) Veröffentlichungsnummer: **0 105 297 B1**

(12) **EUROPÄISCHE PATENTSCHRIFT**

(45) Veröffentlichungstag der Patentschrift:
**17.09.86**

(51) Int. Cl.⁴: **B 60 R 25/02**

(21) Anmeldenummer: **83901077.4**

(22) Anmeldetag: **02.04.83**

(86) Internationale Anmeldenummer:
**PCT/EP 83/00098**

(87) Internationale Veröffentlichungsnummer:
**WO 83/03580 (27.10.83 Gazette 83/25)**

(54) **VORRICHTUNG ZUM SPERREN DER DREHBEWEGUNG EINER LENKSPINDEL EINES KRAFTFAHRZEUGES.**

(30) Priorität: **14.04.82 DE 3213719**

(43) Veröffentlichungstag der Anmeldung:
**18.04.84 Patentblatt 84/16**

(45) Bekanntmachung des Hinweises auf die Patenterteilung:
**17.09.86 Patentblatt 86/38**

(84) Benannte Vertragsstaaten:
**DE FR GB**

(56) Entgegenhaltungen:
**DE - B - 1 078 460**
**FR - A - 442 321**
**FR - A - 681 042**
**US - A - 1 424 353**
**US - A - 1 452 879**
**US - A - 1 700 864**
**US - A - 3 400 563**

(73) Patentinhaber: **NEIMAN S.A., 39, Avenue Marceau, F-92400 Courbevoie (FR)**

(72) Erfinder: **WEBER, Günter, Bergerheide 54, D-5600 Wuppertal 1 (DE)**

(74) Vertreter: **Patentanwaltsbüro Cohausz & Florack, Schumannstrasse 97, D-4000 Düsseldorf 1 (DE)**

## Beschreibung

Die Erfindung betrifft eine Vorrichtung zum Sperren der Drehbewegung einer Lenkspindel eines Kraftfahrzeuges mit durch ein Schloss betätigten Sperriegeln, die in der sperrenden Stellung in einer Ausnehmung der Lenkspindel einliegen, und mit zwischen den Ausnehmungen befindlichen Vorsprüngen, die sperrenden Seitenflächen für die Sperriegel bilden.

Es ist bekannt, eine Lenkspindel durch einen radialen bolzenförmigen Sperriegel gegen Drehen zu sichern. Diese Sperriegel werden durch übliche Lenkschlösser bewegt, wobei nach vollständigem Schlüsselabzug der Sperriegel in eine Ausnehmung einer auf der Lenkspindel angeordneten Muffe einfällt. Dabei liegt nach Schlüsselabzug das vordere Ende des Sperriegels so lange auf der Muffe auf, bis durch Drehen des Lenkrades die Ausnehmung in der Muffe erreicht ist. Der Sperriegel fällt dann durch Federwirkung in die Ausnehmung ein.

Solange der Sperriegel nicht eingefallen ist, ist das Fahrzeug begrenzt steuerbar. Ferner kann bei nicht eingefallenem Sperriegel das Lenkrad durch einen Unbefugten derart kräftig gedreht werden, dass insbesondere aufgrund der Schwungmasse (auch einer zusätzlichen Schwungmasse) der Sperriegel abgeschert werden kann. Auch kann der nicht eingefallene Sperriegel durch Manipulation zurückgehalten werden, so dass das Fahrzeug beliebig lenkbar wird.

Aus der FR-A-681 042 ist es bekannt, zwei Sperriegel in regelmässige Ausnehmungen eines auf der Lenkspindel befestigten Zahnrades einfallen zu lassen. In bestimmten Drehstellungen der Lenkspindel liegen beide Sperriegel jeweils auf einem Zahn auf, so dass sie von einem Unbefugten durch Werkzeuge zurückgehalten werden können.

Aufgabe der Erfindung ist es, eine Vorrichtung der eingangs genannten Art derart zu verbessern, dass bei abgeschlossenem Lenkschloss in jeder Stellung der Lenkspindel ein Sperren der Drehbewegung erfolgt.

Diese Aufgabe wird erfindungsgemäss durch die kennzeichnenden Merkmale des Patentanspruchs 1 gelöst.

Die Sperrvorrichtung führt nach Schlüsselabzug immer zu einem Einfallen wenigstens eines Sperriegels, ohne dass nach Schlüsselabzug das Lenkrad gedreht werden muss. Je nach der gewünschten Kraftaufnahme können zwei oder mehr Sperriegel angeordnet werden.

In den Unteransprüchen sind besonders vorteilhafte Ausgestaltungen der Erfindung angeführt. Diese Ausgestaltungen zeigen unter anderem folgende Vorteile:

– Geringe Abmessungen in radialer und axialer Richtung.

– Sollte nur ein Sperriegel eingefallen sein, so erfolgt ein Einfallen des zweiten Sperriegels sofort, nachdem das Lenkrad nur um wenige Winkelgrade gedreht wurde.

– Die Ausnehmungen der Lenkspindel können grösser sein als die Breite der Sperriegel und auch grösser als die Breite des zwischen den Ausnehmungen befindlichen Materials (Vorsprünge, Zähne), so dass wenig vorstehende Fläche verbleibt, auf der Sperriegel aufsitzen können, ehe sie sperren, womit die Chance eines nichtsperrenden Aufsitzens verringert ist.

– Die Anordnung von Sperriegeln in nur einer Ebene rechtwinklig zur Lenkspindel.

– wenig Teile

– eine einfache Herstellung

– eine leichte und bequeme Handhabung, insbesondere kein Überwinden von Kräften erforderlich, die durch die Lenkspindel auf das Lenkschloss erzeugt werden,

– geringer Verschleiss

– vielschnittige Verbindungen durch die Sperriegel

– Möglichkeit der Herstellung der meisten Teile aus weniger festem Metall oder Kunststoff, insbesondere der Sperriegel und der an den Sperriegel angrenzenden Teile, insbesondere einer auf der Lenkspindel aufsitzenden Muffe, Rohres oder Ringes, die die Vorsprünge bilden

– geringes Gewicht

Die Herstellung des Sperriegels und der mit dem Sperriegel zusammenarbeitenden Teile auf der Lenkspindel bietet sich besonders an, da die Zahl der Sperriegel und/oder die Länge der Sperriegel in achsparalleler Richtung zur Lenkspindelachse gross sein kann, so dass die einwirkenden Kräfte günstig verteilt und aufgenommen werden können.

Ausführungsbeispiele der Erfindung sind in den Zeichnungen dargestellt und werden im folgenden näher beschrieben. Es zeigen:

Fig. 1 einen Querschnitt durch die Lenksäule in Höhe der Sperrvorrichtung entlang I–I in Fig. 2;

Fig. 2 einen Schnitt nach II–II in Fig. 1;

Fig. 3 bis 6 Schnitte nach Fig. 1 mit verschiedenen Stellungen der Sperriegel;

Fig. 7 einen Querschnitt durch Lenksäule und Sperrvorrichtung eines zweiten Ausführungsbeispieles im Ausschnitt bei sperrenden Sperriegeln;

Fig. 8 einen Schnitt nach Fig. 7 in entsperrter Stellung;

Fig. 9 einen Schnitt nach IX–IX in Fig. 7;

Fig. 10 einen Schnitt nach X–X in Fig. 8;

Fig. 11 einen Querschnitt durch Lenkspindel und Sperrvorrichtung eines dritten Ausführungsbeispieles im Ausschnitt;

Fig. 12 eine perspektivische Darstellung der in Fig. 11 verwendeten Sperriegel;

Fig. 13 einen Querschnitt durch Lenkspindel und Sperrvorrichtung eines vierten Ausführungsbeispiels im Ausschnitt, und

Fig. 14 einen Querschnitt durch Lenkspindel und Sperrvorrichtung eines fünften Ausführungsbeispiels im Ausschnitt.

Auf einer rohrförmigen Lenkspindel 1 eines Kraftfahrzeuges ist eine koaxiale Buchse 2 aufgeschweisst, die auf ihrem zylindrischen Umfang axiale rippenförmige Vorsprünge 3 trägt. Die durch die Vorsprünge 3 und die Lenkspindelachse verlaufenden Mittelebenen $M_V$ bilden miteinander Winkel von 45 Grad. Jeder rippenförmige Vorsprung 3 weist zwei radiale Seitenflächen Z auf, die gleichzeitig die Zwischenräume zwischen den Vorsprüngen 3 bilden, wobei im folgenden diese Zwischenräume als Ausnehmungen 4 bezeichnet werden. Die Vorsprünge 3, die auch Zähne genannt werden können, weisen in Umfangsrichtung der Buchse 2 eine Breite c auf, die einem Drittel der Breite b in Umfangsrichtung der Ausnehmung 4 entspricht. Damit ist die Bogenlänge der Ausnehmung 4 in Höhe des Teilkreises T dreimal so gross wie die Bogenlänge innerhalb des Vorsprungs 3 in Höhe des Teilkreises T.

Seitlich neben der Lenkspindel 1 sind zwei knieförmige Hebel als Sperriegel 5, 6 angelenkt, wobei die beiden Hebel klappsymmetrisch zu einem Radius der Lenkspindel zueinander liegen und die Anlenkachse 7 des ersten Sperriegels 5 den gleichen Abstand zur Lenkspindel 1 hat wie die Anlenkachse 8 des zweiten Sperriegels 6. Durch die beiden Anlenkachsen 7 und 8 und die Lenkspindelachse verlaufende Ebenen bilden miteinander einen Winkel von 38 Grad.

Jeder Sperriegel bildet im wesentlichen drei Bereiche.

Einen ersten Bereich 5a, 6a durch den von der Lenkspindel 1 abgewandten, zur Lenkspindel etwa radialen oder parallel zu einem Radius verschobenen Bereich, einen Bereich 5b, 6b in Höhe der Anlenkachsen 7, 8 und in etwa in Richtung einer Verbindungslinie zwischen diesen Anlenkachsen, und einen an den Bereich 5b, 6b anschliessenden, in die Ausnehmung 4 hineinreichenden Bereich 5c, 6c, der das freie, der Lenkspindel zugewandte Ende der Sperriegel 5, 6 bildet.

Der Bereich 5c bzw. 6b liegt im sperrenden Zustand radial in der Ausnehmung 4 ein und wird etwa in radialer Richtung aus der Ausnehmung 4 herausgezogen. Der Bereich 5c weist insbesondere in Höhe des Teilkreises T dieselbe Breite g wie der Vorsprung 3 auf, so dass drei Bereiche 5c nebeneinander in eine Ausnehmung 4 passen. Durch den Bereich 5b bzw. 6b ragen die Anlenkachsen 7, 8 hindurch, wobei an einer Anlenkachse dieser Bereich angelenkt ist und die andere Anlenkachse in einem Langloch 5d bzw. 6d einliegt, wobei diese Langlöcher so gebogen sind und eine solche Länge aufweisen, dass sie die Bewegungen der Sperriegel 5, 6 nicht behindern, aber eine zusätzliche Stützfunktion an der jeweiligen Anlenkachse bilden. Die einander im Bereich 5b sich kreuzenden, zusammen eine Zange oder Schere bildenden Sperriegel 5, 6 unterscheiden sich von einer Zange oder Schere im wesentlichen nur dadurch, dass getrennte Anlenkachsen für jeden zweiarmigen Hebel vorgesehen sind, und dass die die Zangenbacken bildenden Bereiche 5c, 6c nicht aufeinandertreffen, sondern stets einen Abstand d bilden, der im sperrenden Zustand so gross ist wie der Abstand c der einander abgewandten Seiten Z eines Vorsprungs, und damit gleich der Breite c eines Vorsprungs oder so gross wie der Abstand e der einander abgewandten Seiten Z zweier Vorsprünge 3, wobei zwischen diesen beiden Vorsprüngen noch ein weiterer oder mehrere Vorsprünge liegen können. Somit kann der Abstand d der einander zugewandten Seiten $S_3$, $S_4$ der Bereiche 5c, 6c wie folgt bezeichnet werden:

$$d = x \cdot c + (x{-}1)b,$$

wobei c die Breite eines Vorsprungs 3 und b die Breite einer Ausnehmung 4 ist. Durch diese Grösse des Abstandes d wird sichergestellt, dass die beiden sperrenden Bereiche der Sperriegel 5, 6 immer einen Vorsprung 3 oder mehrere seitlich umgreifen können.

Darüber hinaus ist von Bedeutung, dass die äusseren Seiten $S_1$, $S_2$ der sperrenden Bereiche 5c, 6c der Sperriegel 5, 6 stets an den Seitenflächen Z einer, zweier oder mehrerer Ausnehmungen 4 gleichzeitig zur Anlage gelangen, wobei wiederum vorausgesetzt wird, dass beide Sperriegel sperrend einliegen. Hierbei ist dafür zu sorgen, dass der Abstand a der einander abgewandten Seiten $S_1$, $S_2$ der sperrenden Bereiche 5c, 6c gleich oder kleiner ist wie der Abstand b, $b_1$, $b_2$ der einander zugewandten Seitenflächen Z zweier Vorsprünge 3. Damit muss der Abstand a folgende Grösse haben, wobei die Bereiche 5c, 6c in derselben oder verschiedenen Ausnehmungen 4 einliegen können:

$$a = x \cdot b + (x{-}1)c$$

Dabei ist b die Breite einer Ausnehmung 4 und c die Breite eines Vorsprungs 3.

Um die von den Vorsprüngen 3 auf die Sperriegel 5, 6 bei gewaltsamem Verdrehen der Lenkspindel aufgebrachten Kräfte optimal abzufangen, sind im sperrenden Zustand die Flächen S1 bis S4 und Z radial bzw. in Ebenen angeordnet, in denen die Lenkspindelachse liegt. Ferner ist dafür gesorgt, dass eine Normale N jeweils die Anlenkachse eines Sperriegels schneidet, wobei diese Normale senkrecht auf einer Mittelebene $M_S$ steht, die mittig zwischen den beiden Seiten des sperrenden Bereichs des jeweiligen Sperriegels verläuft und ferner die Lenkspindelachse enthält. Dabei ist noch dafür gesorgt, dass der Fusspunkt der Normalen im Schnittpunkt des Teilkreises der Vorsprünge 3 mit der Mittelebene $M_S$ liegt.

Beide Sperriegel 5, 6 sind zur sperrenden Stellung hin durch je eine Feder 9, 10 belastet, so dass diese Federn dafür sorgen, dass beide freien Enden der Sperriegel sich einander nähern. Durch diese Federn sind die Bereiche 5a, 6a der beiden Sperriegel in der sperrenden Stellung in einer Lage etwa parallel zueinander, wobei die einander zugerichteten Seiten dieser Bereiche von einem bzw. zwei Exzentern 11, 12 oder Nocken bzw. einer oder zwei Kurvenscheiben derart betätigt werden, dass diese zwischen den Bereichen 5a, 6a liegenden Exzenter diese Bereiche auseinanderdrücken und damit die Bereiche 5c, 6c aus der sperrenden Stellung in die freie Stellung bewegen. Die Exzenter 11, 12 sind an der Stirnseite einer Kreisscheibe 13 diametral und achsparallel befestigt, die auf einer Verlängerung des Zylinderkerns des Schlosses sitzt. Die Sperrvorrichtung einschliesslich der Lenkspindel im Bereich der Sperrvorrichtung ist von einem Gehäuse 14 umgeben, das einstückig mit dem Gehäuse 15 des Zylinderschlosses ausgebildet ist. Die Verlängerung 16 des Zylinderkerns ragt durch die Kreisscheibe 13 hindurch bis in einen Schalter 17 hinein.

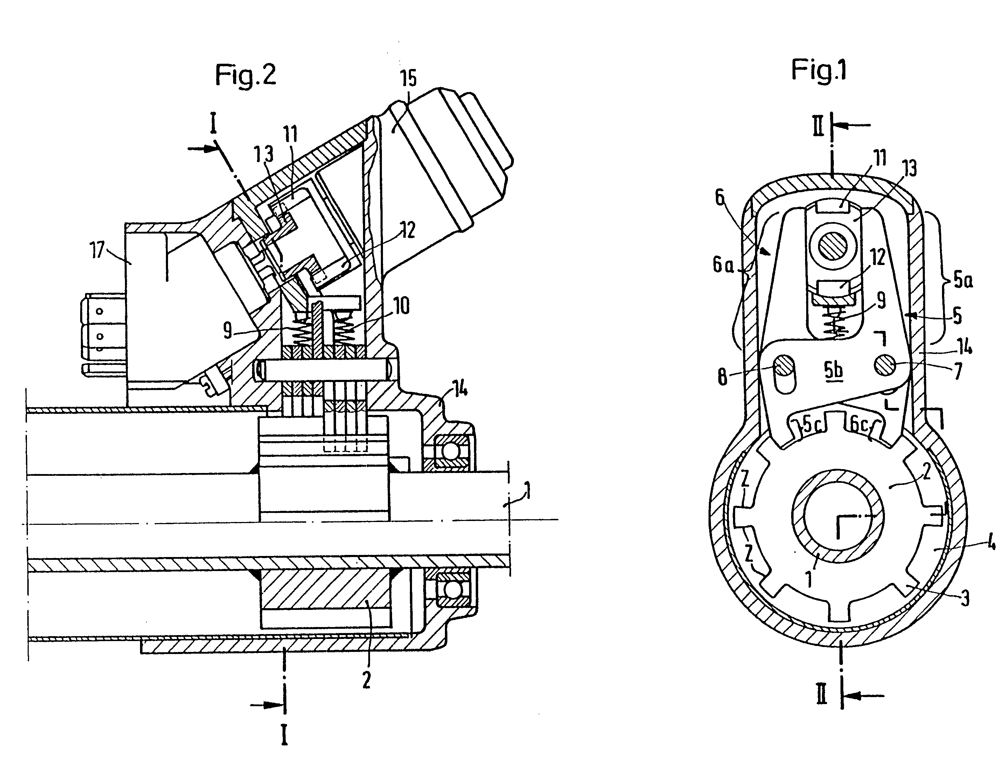

Jeder Sperriegel 5, 6 liegt im Bereich des Knies bzw. in Höhe der Anlenkachse mit der Aussenseite an der Innenseite des Gehäuses 14 an, so dass jeder Hebel nicht nur durch die beiden Anlenkachsen, sondern auch durch das Gehäuse gegen Kräfte abgestützt ist, die von den Vorsprüngen 3 auf die Bereiche 5c, 6c ausgeübt werden. Die hebelförmigen Sperriegel 5, 6 können aus einem einzigen Blechteil gestanzt sein, wobei die Flachseiten dieser Teile rechtwinklig zur Lenkspindelachse liegen. Eine hohe Kraftaufnahme bei einfachster Fertigung wird dann erreicht, wenn mehrere gestanzte Blechteile zu einem Sperriegel zusammengefasst werden, wie dies in Fig. 2 dargestellt ist. Statt zweier Sperriegel können auch mehrere Sperriegel rundum die Lenkspindel angeordnet werden, wobei durch Steuergestänge, insbesondere zur Lenkspindel koaxiale Steuerringe, die Sperriegel vom Schloss betätigt werden.

Während bei dem Ausführungsbeispiel nach den Fig. 1 bis 6 die Sperriegel radial in die Ausnehmungen der Lenkspindel bzw. der Buchse 2 eingreifen, können diese auch axial eingreifen, wenn die Hebel etwa parallel zur Lenkspindel liegen, d.h. insbesondere bei einem Sperriegelpaar entsprechend dem ersten Ausführungsbeispiel liegt die Mittelachse der zangen- oder scherenförmigen Sperriegel parallel zur Lenkspindel nahe an der Lenkspindel neben der Buchse 2, so dass die sperrenden Bereiche 5c, 5d bzw. die Backen oder Klauen der Zange bzw. Schere stirnseitig in die Ausnehmungen der Buchse eingreifen. Ein solches Ausführungsbeispiel ist in den Zeichnungen nicht dargestellt.

Die Sperrvorrichtung arbeitet wie folgt:

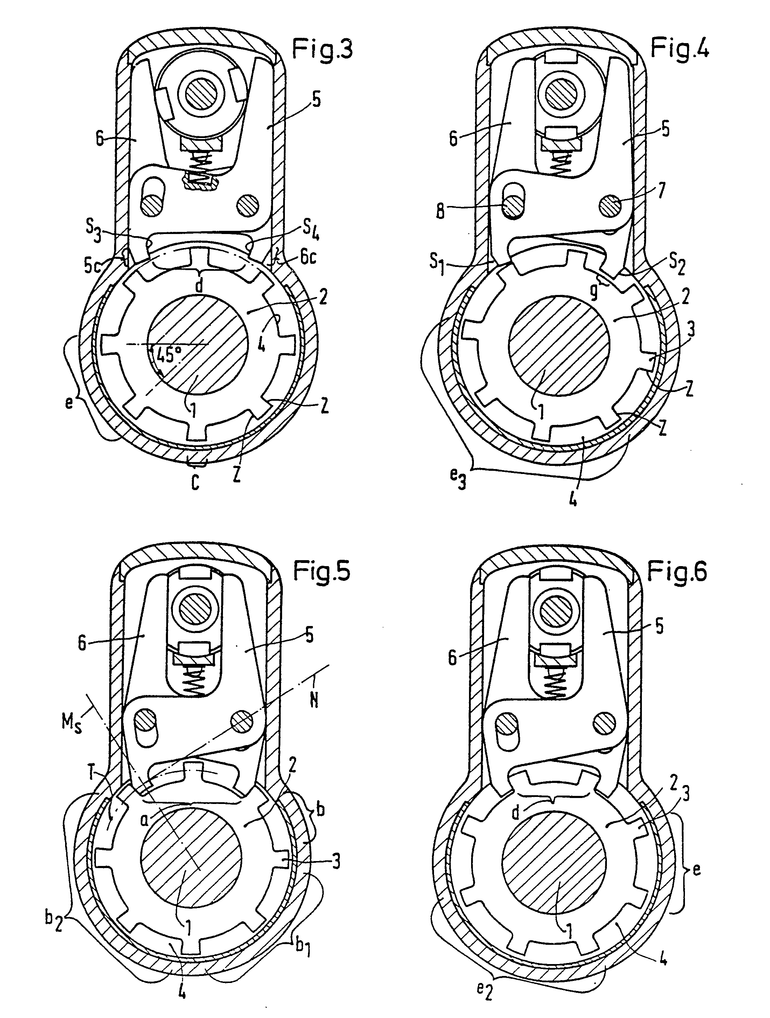

Aus der in den Fig. 5 oder 6 dargestellten Sperrlage der Sperriegel 5, 6 werden diese durch Drehen des Zylinderkerns des Schlosses mit einem Schlüssel von den Exzentern 11, 12 in die freigebende Lage geschwenkt, Fig. 3. In dieser Lage kann sich die Lenkspindel mit ihrer Buchse 2 frei bewegen. Wird die Exzenterscheibe 13 durch den Schlüssel in umgekehrter Richtung gedreht, so werden die Bereiche 5a, 6a freigegeben, wobei drei unterschiedliche Sperrlagen oder Sperriegel je nach Stellung der Lenkspindel entstehen können. Die sperrenden Bereiche 5c, 6c können entsprechend Fig. 5 in zwei unterschiedlichen Ausnehmungen 4 einliegen, wobei sie dann mit ihren einander abgewandten Seiten $S_1$, $S_2$ die Lenkspindel gegen Verdrehen sichern. Dabei sind die sperrenden Bereiche in zwei nebeneinanderliegenden Ausnehmungen 4 eingefallen. Bei einer Stellung nach Fig. 6 können die sperrenden Bereiche aber auch in zwei Ausnehmungen 4 fallen, zwischen denen eine weitere Ausnehmung liegt, wobei dann die Innenseite $S_3$, $S_4$ der sperrenden Bereiche zwei Vorsprünge 3 umfassen und an den einander abgewandten Seiten Z dieser Vorsprünge anliegen. In beiden Sperriegelstellungen ist die Lenkspindel unbeweglich gehalten, und ein auf die Lenkspindel erzeugtes Drehmoment führt nicht zu einem Ausheben der sperrenden Bereiche, da diese nur radial aus den Ausnehmungen 4 herausgehoben werden können und die Seitenflächen bzw. Flanken der sperrenden Bereiche und der Vorsprünge parallel zu dieser Aushubrichtung liegen, während eine Kraftübertragung rechtwinklig dazu erfolgt.

Bei Zwischenstellungen der Lenkspindel geschieht es, dass einer der beiden Bereiche 5c, 6c der Sperriegel auf der Oberseite eines der Vorsprünge 3 zu liegen kommt und damit nicht in eine Ausnehmung 4 einfallen kann. In dieser Lenkspindeldrehstellung kann aber der sperrende Bereich des anderen Sperriegels in eine Ausnehmung 4 einfallen, da die Abstände bzw. Abmessungen so gewählt sind, dass stets einer der beiden Sperriegel in eine Ausnehmung einfällt, Fig. 4. In dieser Zwischenstellung ist die Lenkspindel geringfügig beweglich, wobei ein Drehen der Lenkspindel um wenige Winkelgrade dazu führt, dass auch der bisher nicht sperrende Sperriegel in eine Ausnehmung einfällt und dann die Lenkspindel unbeweglich festsitzt. Bei einem Drehen der Lenkspindel in Fig. 4 nach rechts erfolgt ein Sperren entsprechend Fig. 6, und bei einem Drehen der Lenkspindel nach links in Fig. 4 erfolgt ein Sperren entsprechend Fig. 5.

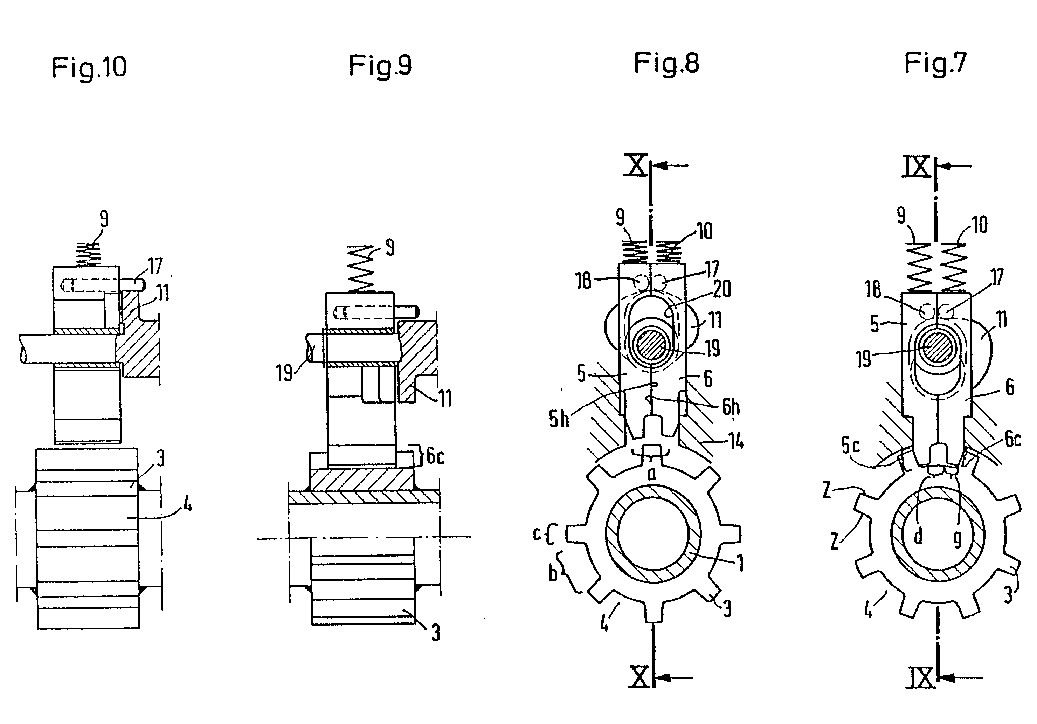

Das Ausführungsbeispiel nach den Fig. 7 bis 10 unterscheidet sich von dem ersten nur dadurch, dass die sperrenden Bereiche 5c, 6c nicht von Hebeln, sondern von längsbeweglichen Bolzen 5, 6 gebildet werden, die mit zwei Seitenflächen 5h, 6h aneinanderliegen, wobei diese beiden Seitenflächen radial zur Lenkspindel 1 angeordnet sind. Die Bolzen weisen zwischen den sperrenden Bereichen 5c, 6c einen Abstand d von der Breite c eines Vorsprungs 3 auf, und die einander abgewandten äusseren Sperrflächen $S_1$, $S_2$ der sperrenden Bereiche besitzen voneinander einen Abstand a, der der Breite b der Abmessung 4 entspricht. Durch diese Wahl der Abmessungen und Abstände fallen entweder beide sperrenden Bereiche in eine einzige Ausnehmung 4 ein, oder aber die sperrenden Bereiche der Sperriegel umfassen einen Vorsprung 3. Auch sind wiederum Zwischenstellungen möglich, bei denen einer der beiden Sperriegel auf der Oberseite eines Vorsprungs aufliegt.

Die beiden Sperriegel werden durch einen einzigen Exzenter 11 betätigt, der an Stiften 17, 18 angreift, die seitlich rechtwinklig von den Bolzen abstehen. Eine den Exzenter 11 tragende Welle 19 durchquert die Bolzen, wobei hierzu die Bolzen mittig ein Langloch 20 bilden.

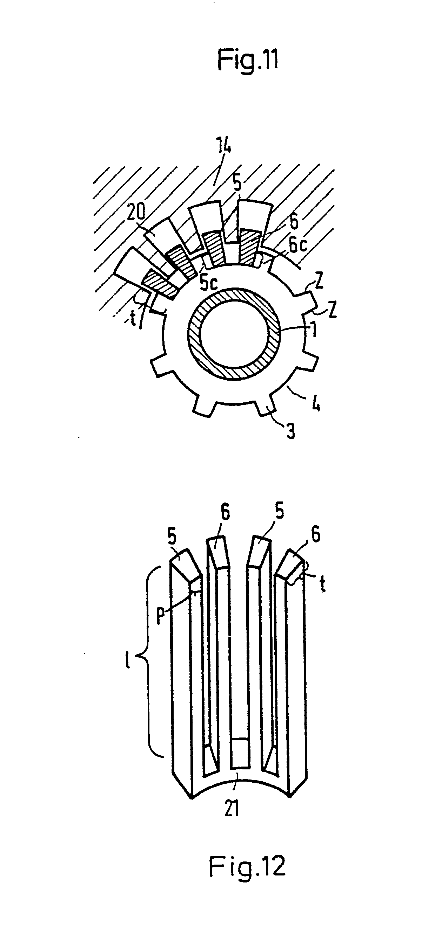

Das Ausführungsbeispiel nach den Fig. 11 und 12 unterscheidet sich von den vorangehenden dadurch, dass die Sperriegel von Leisten 5, 6 gebildet werden, die paarweise achsparallel zur Lenkspindel neben der leistenförmige Vorsprünge aufweisenden Buchse 2 angeordnet sind. Die Leisten sind zur Lenkspindel 1 hin federbelastet oder federnd, so dass sie mit ihren den Lenkspindel zugewandten sperrenden Bereichen 5c, 6c in die Ausnehmungen 4 einfallen. Die radiale Tiefe t der Leisten ist geringer als deren Länge 1, und die Breite p ist im sperrenden Bereich geringer als die radiale Tiefe t und gleich ⅓ der Breite b der Ausnehmung 4 und gleich der Breite c der Vorsprünge 3. Wie auch bei den übrigen Ausführungsbeispielen verringern sich die sperrenden Bereiche 5c, 6c zur Lenkspindel hin keilförmig, wobei beim Ausführungsbeispiel nach Fig. 11 und 12 die keilförmige Form auch ausserhalb der sperrenden Bereiche weitergeführt ist und die Bolzen 5, 6 in keilförmigen Ausnehmungen 20 des Sperrvorrichtungsgehäuses 14 geführt sind.

Die Bolzen bzw. Leisten 5, 6 nach Fig. 11, 12 sind um eine Achse schwenkbar, die parallel zu einer Tangente liegt, die im Bereich der Leiste an der Buchse 2 anliegt. Damit ist diese Schwenkachse rechtwinklig zu einem verlängerten Radius der Lenkspindel bzw. Buchse, der mittig durch die Leiste verläuft. Die Anlenkachsen können mittig zwischen den beiden Enden der Leiste angeordnet sein, so dass nur ein Teil der Leiste sperrend wirkt und der übrige Teil zur Betätigung der Leiste von der Lenkspindel bzw. der Buchse schräg absteht. Alternativ kann die Schwenkachse aber auch an einem Ende der Leisten angeordnet sein, wobei dann die Schwenkachse auch von einem Ringsektor 21 gebildet sein kann, an dem die Leisten 5, 6 angeformt sind. Da in allen Ausführungsbeispielen alle Teile aus Kunststoff geformt sein können, ist eine Ausbildung der Leisten aus Kunststoff besonders vorteilhaft, da dann auch der Ringsektor 21 aus Kunststoff besteht und die federnde Beaufschlagung der Leisten erzeugen kann. Durch nicht dargestellte Mittel werden die Leisten aus der sperrenden Lage gegen Federdruck radial durch das Schloss herausgezogen. Als solche Mittel können ein Ring, Ringsektor, Stifte oder Kabel dienen, die besonders wenig Platz erfordern.

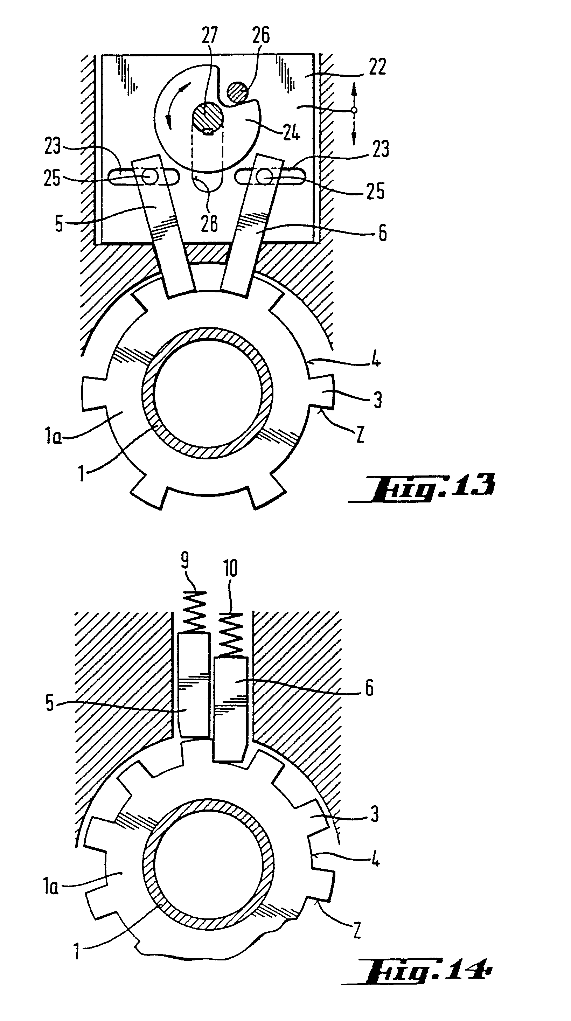

Beim Ausführungsbeispiel nach Fig. 13 liegen die beiden Sperriegel nicht direkt nebeneinander, sondern sie sind im Abstand zueinander radial zur Lenksäule angeordnet, so dass bei von der Lenksäule bzw. von den Seitenflächen Z auf die Sperriegel ausgeübten Kräfte keine Kräfte erzeugt werden, die die Sperriegel aus ihrer sperrenden Stellung bringen könnten. Die beiden Sperriegel 5, 6 weisen an den äusseren Enden seitliche Vorsprünge 25 auf, die in schlitzförmigen Ausnehmungen 23 einer zur Lenksäule rechtwinklig angeordneten Blechkulisse 22 einliegen, um durch diese Blechkulisse betätigt zu werden. Die Blechkulisse 22 weist an einer Seitenfläche einen rechtwinkligen Stift 26 auf, der von einer Kurvenscheibe 24 betätigt wird, die auf einer Achse 27 drehfest ist. Bei Drehung der Achse 27 wird die Kulisse 22 von der Lenkspindel 1 wegbewegt, und damit werden die Sperriegel 5, 6 aus der in Fig. 13 dargestellten sperrenden Stellung in eine nichtsperrende Stellung bewegt. Die Achse 27 liegt in einem Schlitz 28 der Kulisse 22 ein, und Stift 26, Achse 27 als auch Vorsprünge 25 sind parallel zur Lenkspindelachse.

Das in Fig. 14 dargestellte Ausführungsbeispiel unterscheidet sich von dem nach den Fig. 7 bis 10 im wesentlichen dadurch, dass die Ausnehmungen 4 der Lenkspindel bzw. des auf der Lenkspindel befestigten zahnförmigen Teils 1a eine geringere Breite aufweist als die Gesamtbreite beider Sperriegel 5, 6. Hierdurch wird nicht mit absoluter Sicherheit erreicht, dass bei jeder Stellung der Lenkspindel ein Sperriegel in eine der Ausnehmungen 4 eingefallen ist, aber die Wahrscheinlichkeit ist wesentlich höher als bei einem einzigen Sperriegel.

**Patentansprüche**

1. Vorrichtung zum Sperren der Drehbewegung einer Lenkspindel (1) eines Kraftfahrzeuges mit einem durch ein Schloss betätigten Sperriegeln (5, 6), die in der sperrenden Stellung in regelmässiger Ausnehmung (4) der Lenkspindel einliegen, und mit zwischen den Ausnehmungen (4) befindlichen Vorsprüngen (3), die sperrende Seitenflächen (Z) für die Sperriegel (5, 6) bilden, dadurch gekennzeichnet, dass die Breite (b) den Ausnehmungen (4) mindestens gleich der dreifachen Breite (c) der Vorsprünge (3) ist, und die Sperriegel (5, 6) im sperrenden Bereich voneinander einen Abstand (d) haben, der mindestens der Breite (c) eines Vorsprungs (3) ist.

2. Vorrichtung nach Anspruch 1, dadurch gekennzeichnet, dass die Ausnehmungen (4) der Lenkspindel (1) achsparallele Nuten und die dazwischen befindlichen Vorsprünge (3) achsparallele Rippen oder Zähne sind.

3. Vorrichtung nach Anspruch 2, dadurch gekennzeichnet, dass der Abstand (d) der einander zugewandten Seiten ($S_3$, $S_4$) der beiden Sperriegel (5, 6) in den sperrenden Bereichen (5c, 6c) mindestens so gross ist wie der Abstand (c, e) der einander abgewandten Seiten (Z) eines oder zweier Vorsprünge (3).

4. Vorrichtung nach Anspruch 3, dadurch gekennzeichnet, dass bei einer Sperrwirkung zweier Vorsprünge (3) zwischen diesen ein weiterer Vorsprung (3) oder mehrere liegen.

5. Vorrichtung nach Anspruch 2, dadurch gekennzeichnet, dass der Abstand (d) der einander zugewandten Seiten ($S_3$, $S_4$) der beiden Sperriegel (5, 6) in den sperrenden Breichen (5c, 6c) mindestens so gross ist wie das x-fache einer Vorsprungbreite (c) plus dem x minus eins-fachen der Ausnehmungsbreite (b).

6. Vorrichtung nach einem der Ansprüche 1 bis 5, dadurch gekennzeichnet, dass der Abstand (a) der einander abgewandten Seiten der beiden Sperriegel (5, 6) in den sperrenden Bereichen (5c, 6c) gleich oder kleiner ist wie die Breite (b) einer Ausnehmung (4).

7. Vorrichtung nach Anspruch 6, dadurch gekennzeichnet, dass der Abstand (a) der einander abgewandten Seiten ($S_1$, $S_2$) der beiden Sperriegel (5, 6) gleich oder kleiner ist wie der Abstand (b, $b_1$, $b_2$) der einander zugewandten Seitenflächen (Z) zweier Vorsprünge (3).

8. Vorrichtung nach Anspruch 7, dadurch gekennzeichnet, dass zwischen den Vorsprüngen (3), deren einander zugewandte Seitenflächen ($S_3$, $S_4$) sperrend wirken, ein oder mehrere Vorsprünge liegen.

9. Vorrichtung nach Anspruch 7 oder 8, dadurch gekennzeichnet, dass der Abstand (a) der einander abgewandten Seiten ($S_1$, $S_2$) der beiden Sperrriegel (5, 6) gleich oder nicht grösser ist als das x-fache einer Ausnehmungsbreite (b) plus dem x minus eins-fachen einer Vorsprungsbreite (c).

10. Vorrichtung nach einem der Ansprüche 1 bis 9, dadurch gekennzeichnet, dass der sperrende Bereich (5c, 6c) jedes Sperriegels (5, 6) etwa dieselbe Breite (g) aufweist wie die Breite (c) jedes Vorsprunges (3).

11. Vorrichtung nach einem der Ansprüche 1 bis 10, dadurch gekennzeichnet, dass mehr als zwei Sperriegel (5, 6) angeordnet sind, die in die Ausnehmungen (4) der Lenkspindel (1) eingreifen.

12. Vorrichtung nach einem der Ansprüche 1 bis 11, dadurch gekennzeichnet, dass die Ausnehmungen (4) und Vorsprünge (3) der Lenkspindel (1) von einem auf der Lenkspindel befestigten Ring oder Hülse (2) gebildet sind.

13. Vorrichtung nach einem der Ansprüche 1 bis 12, dadurch gekennzeichnet, dass die in die Ausnehmungen (4) der Lenkspindel (1) eindringenden Sperriegel (5, 6) von Bolzen oder Hebeln gebildet werden.

14. Vorrichtung nach Anspruch 13, dadurch gekennzeichnet, dass die längsverschieblichen Bolzen (5, 6) radial zur Lenkspindel (1) gelagert sind und zwischen von der Lenkspindel vorstehenden Vorsprüngen (3) eingreifen.

15. Vorrichtung nach Anspruch 13, dadurch gekennzeichnet, dass die längsverschieblichen Bolzen (5, 6) dicht an der Lenkspindel (1) achsparallel zu dieser gelagert sind.

16. Vorrichtung nach Anspruch 15, dadurch gekennzeichnet, dass die achsparallelen Bolzen (5, 6) in Ausnehmungen (4) an der Stirnseite einer auf der Lenkspindel (1) befestigten Hülse (2) oder Ringes eingreifen.

17. Vorrichtung nach Anspruch 15, dadurch gekennzeichnet, dass eine auf der Lenkspindel (1) befestigte Hülse (2) oder ein Ring als Ausnehmungen (4) Öffnungen aufweist, die die Hülse oder den Ring achsparallel durchdringen, durch die die Bolzen (5, 6) durchsteckbar sind.

18. Vorrichtung nach einem der Ansprüche 13 bis 17, dadurch gekennzeichnet, dass die Bolzen (5, 6) nur in den sperrenden Bereichen (5c, 6c) zwischen sich einen Abstand (d) von mindestens der Breite (c) eines Vorsprunges (3) bilden und über zumindest einen Grossteil der übrigen Länge aneinanderliegen.

19. Vorrichtung nach einem der Ansprüche 1 bis 18, dadurch gekennzeichnet, dass die Sperriegel (5, 6) über einen oder mehrere Exzenter (11, 12) oder Kurventeile vom Schloss betätigbar sind.

20. Vorrichtung nach einem der Ansprüche 13 bis 19, dadurch gekennzeichnet, dass an den Bolzen oder Hebeln rechtwinklig Stifte (17, 18) vorstehen, die von einem Exzenter (11) oder Kurventeil beaufschlagbar sind.

21. Vorrichtung nach einem der Ansprüche 13 bis 19, dadurch gekennzeichnet, dass die Bolzen (5, 6) achsparallele Leisten sind, deren radiale Tiefe (t) geringer ist als deren Länge (1).

22. Vorrichtung nach Anspruch 21, dadurch gekennzeichnet, dass die Breite (P) der Leisten (5, 6) geringer ist als deren radiale Tiefe (t).

23. Vorrichtung nach Anspruch 21 oder 22, dadurch gekennzeichnet, dass die Leisten (5, 6) an einem Ende an einem die Lenkspindel (1) koaxial umgebenden Ring oder Ringsektor (21) befestigt, insbesondere angeformt sind.

24. Vorrichtung nach einem der Ansprüche 21 bis 23, dadurch gekennzeichnet, dass die Leisten (5, 6) als Hebel insbesondere um ein Ende schwenkbar gelagert sind, wobei die Schwenkachse parallel zu einer Tangente am Lenkspindelumfang liegt.

25. Vorrichtung nach Anspruch 13, 19 oder 24, dadurch gekennzeichnet, dass die Schwenkachsen (7, 8) der Hebel (5, 6) achsparallel zur Lenkspindel (1) sind.

26. Vorrichtung nach Anspruch 13, 19 oder 24, dadurch gekennzeichnet, dass die Hebel (5, 6) etwa radial von der Lenkspindel (1) abstehen.

27. Vorrichtung nach Anspruch 13, 19, 24 bis 26, dadurch gekennzeichnet, dass die der Lenkspindel (1) zugewandten Hebelenden zwischen von der Lenkspindel vorstehenden Vorsprüngen (3) eingreifen.

28. Vorrichtung nach einem der Ansprüche 13, 19, 24 bis 27, dadurch gekennzeichnet, dass die Hebel (5, 6) zweiarmig sind.

29. Vorrichtung nach Anspruch 28, dadurch gekennzeichnet, dass die Hebel (5, 6) knieförmig sind.

30. Vorrichtung nach einem der Ansprüche 13, 19, 24 bis 29, dadurch gekennzeichnet, dass die Hebel (5, 6) Z-förmig sind.

31. Vorrichtung nach einem der Ansprüche 13, 19, 24 bis 30, dadurch gekennzeichnet, dass die Hebel (5, 6) im Bereich der Anlenkachse (7, 8) mit ihren seitlichen Flachseiten aneinanderliegen.

32. Vorrichtung nach einem der Ansprüche 13, 19, 24 bis 31, dadurch gekennzeichnet, dass die der Lenkspindel (1) zugewandten freien Enden der Hebel (5, 6) die in die Ausnehmungen einliegenden sperrenden Bereiche (5c, 6c) bilden.

33. Vorrichtung nach einem der Ansprüche 13, 19, 24 bis 32, dadurch gekennzeichnet, dass die der Lenkspindel (1) abgewandten freien Enden der Hebel (5, 6) zwischen sich einen Abstand bilden, in dem ein vom Schloss betätigbares Teil, insbesondere ein oder zwei Exzenter (11, 12) einliegt(en).

34. Vorrichtung nach einem der Ansprüche 13, 19, 24 bis 33, dadurch gekennzeichnet, dass die Schwenkachse (7, 8) eines Hebels (5, 6) durch ein gebogenes Langloch des jeweils anderen Hebels (6, 5) verläuft.

35. Vorrichtung nach einem der Ansprüche 13, 19, 24 bis 34, dadurch gekennzeichnet, dass im Bereich der Schwenkachse (7, 8) jeder Hebel (5, 6) mit einem dem Eingriffsbereich (5c, 6c) abgewandten Bereich an der Gehäuseinnenwandung der Vorrichtung gleitend anliegt.

36. Vorrichtung nach einem der Ansprüche 1 bis 35, dadurch gekennzeichnet, dass die Sperriegel (5, 6) in Eingriffsrichtung federbelastet sind.

37. Vorrichtung nach einem der Ansprüche 1 bis 36, dadurch gekennzeichnet, dass die Flanken bzw. Seiten (Z) der Vorsprünge (3) und die sperrenden Bereiche (5c, 6c) der Sperriegel (5, 6) in Ebenen liegen, in denen die Lenkspindelachse liegt.

38. Vorrichtung nach einem der Ansprüche 13, 19, 24 bis 37, dadurch gekennzeichnet, dass durch die Schwenkachse (7, 8) des Hebels (5, 6) eine Normale (N) verläuft, die auf einer durch die Lenkspindelachse und den sperrenden Bereich (5c, 6c) des Hebels (5, 6) verlaufenden Ebene ($M_S$) steht in einem Schnittpunkt, den der Teilkreis (T) der Vorsprünge (3) der Lenkspindel (1) mit dieser Ebene ($M_S$) bildet.

39. Vorrichtung nach einem der Ansprüche 1 bis 38, dadurch gekennzeichnet, dass die Sperriegel (5, 6) jeweils aus mehreren mit den Flachseiten aneinanderliegenden Blechen bestehen, von denen Bereiche der Schmal- bzw. Stirnseiten die sperrenden Bereiche (5c, 6c) bilden.

40. Vorrichtung nach einem der Ansprüche 1 bis 39, dadurch gekennzeichnet, dass in bezug auf die Lenkspindel (1) die Sperriegel (5, 6) mit ihrer Längsachse radial angeordnet sind.

41. Vorrichtung nach einem der Ansprüche 1 bis 40, dadurch gekennzeichnet, dass die Sperriegel (5, 6) nur auf einer Seite der Lenkspindel (1), insbesondere in einem Winkelbereich von je $\leq 90$ Grad angeordnet sind.

**Claims**

1. Device for blocking the rotating movement of a steering spindle (1) of a motor vehicle with lock bolts (5, 6) which in the blocking position lie in regular recesses (4) of the steering spindle, and with projections (3) situated between the recesses (4) and forming blocking side faces (Z) for the lock bolts (5, 6), characterised in that the width (b) of the recesses (4) is at least equal to three times the width (c) of the projections (3), and in the blocking zone the lock bolts (5, 6) have a spacing (d) from one another which is at least the width (c) of a projection (3).

2. Device according to claim 1, characterized in that the recesses (4) of the steering spindle (1) are grooves parallel with the axis and the projections (3) situated therebetween are ribs or teeth parallel with the axis.

3. Device according to claim 2, characterised in that the distance (d) between the mutually facing sides ($S_3$, $S_4$) of the two lock bolts (5, 6) in the blocking zones (5c, 6c) is at least as great as the distance (c, e) between the mutually remote sides (Z) of one or two projections (3).

4. Device according to claim 3, characterised in that when two projections (3) are in blocking action one or more further projections (3) lie between them.

5. Device according to claim 2, characterised in that the distance (d) between the mutually facing sides ($S_3$, $S_4$) of the two lock bolts (5, 6) in the blocking zones (5c, 6c) is at least as great as x times a projection width (c) plus x-1 times the recess width (b).

6. Device according to one of claims 1 to 5, characterised in that the distance (a) between the mutually remote sides of the two lock bolts (5, 6) in the blocking zones (5c, 6c) is equal to or less than the width (b) of a recess (4).

7. Device according to claim 6, characterised in that the distance (a) between the mutually remote sides ($S_1$, $S_2$) of the two lock bolts (5, 6) is equal to or less than the distance (b, $b_1$, $b_2$) between the mutually facing side faces (Z) of two projections (3).

8. Device according to claim 7, characterised in that one or more projections lie between the projections (3) of which the mutually facing side faces ($S_3$, $S_4$) have a blocking effect.

9. Device according to claim 7 or 8, characterised in that the distance (a) between the mutually remote sides ($S_1$, $S_2$) of the two lock bolts (5, 6) is equal to or not greater than x times a recess width (b) plus x-1 times a projection width (c).

10. Device according to one of claims 1 to 9, characterised in that the blocking zones (5c, 6c) of each lock bolt (5, 6) has approximately the same width (g) as the width (c) of each projection (3).

11. Device according to one of claims 1 to 10, characterised in that more than two lock bolts (5, 6) are arranged which engage in the recesses (4) of the steering spindle (1).

12. Device according to one of claims 1 to 11, characterised in that the recesses (4) and projections (3) of the steering spindle (1) are formed by a ring or sleeve (2) secured on the steering spindle.

13. Device according to one of claims 1 to 12, characterised in that the lock bolts (5, 6) which penetrate into the recesses (4) of the steering spindle (1) are formed by bolts or levers.

14. Device according to claim 13, characterised in that the longitudinally displaceable bolts (5, 6) are mounted radially of the steering spindle (1) and engage between projections (3) protruding from the steering spindle.

15. Device according to claim 13, characterised in that the longitudinally displaceable bolts (5, 6) are mounted close to the steering spindle (1) and axially parallel therewith.

16. Device according to claim 15, characterised in that the axially parallel bolts (5, 6) engage in recesses (4) on the end face of a sleeve (2) or ring secured on the steering spindle (1).

17. Device according to claim 15, characterised in that a sleeve (2) or ring secured on the steering spindle (1) comprises as recesses (4) openings which penetrate the sleeve or ring parallel with the axis, through which openings the bolts (5, 6) can be pushed.

18. Device according to one of claims 13 to 17, characterised in that the bolts (5, 6) form an interval (d) of at least the width (c) of a projection (3) only in the blocking zones (5c, 6c), and lie against one another over at least a large part of the remaining length.

19. Device according to one of claims 1 to 18, characterised in that the lock bolts (5, 6) are actuatable by the lock through one or more eccentrics (11, 12) or cam parts.

20. Device according to one of claims 13 to 19, characterised in that pins (17, 18) protrude at right angles on the bolts or levers and can be loaded by an eccentric (11) or cam part.

21. Device according to one of claims 13 to 19, characterised in that the bolts (5, 6) are strips parallel with the axis, the radial depth (t) of which is less than their length (1).

22. Device according to claim 21, characterised in that the width (P) of the strips (5, 6) is less than their radial depths (t).

23. Device according to claim 21 or 22, characterised in that the strips (5, 6) are secured, especially moulded on, to a ring or ring sector (21) coaxially surrounding the steering spindle (1).

24. Device according to one of claims 21 to 23, characterised in that the strips (5, 6) are mounted as levers pivotably especially about one end, the pivot axis lying parallel to a tangent to the steering spindle circumference.

25. Device according to claim 13, 19 or 24, characterised in that the pivot axes (7, 8) of the levers (5, 6) are axially parallel with the steering spindle (1).

26. Device according to claim 13, 19 or 24, characterised in that the levers (5, 6) protrude approximately radially from the steering spindle (1).

27. Device according to claim 13, 19, 24 to 26, characterised in that the lever ends turned towards the steering spindle (1) engage between projections (3) protruding from the steering spindle.

28. Device according to one of claims 13, 19, 24 to 27, characterised in that the levers (5, 6) are two-armed.

29. Device according to claim 28, characterised in that the levers (5, 6) are of toggle form.

30. Device according to one of claims 13, 19, 24 to 29, charcterised in that the levers (5, 6) are of Z-form.

31. Device according to one of claims 13, 19, 24 to 30, characterised in that the levers (5, 6) lie against one another with their lateral flat sides in the region of the axis (7, 8) of articulated attachment.

32. Device according to one of claims 13, 19, 24 to 31, characterised in that the free ends of the levers (5, 6) turned towards the steering spindle (1) from the blocking zones (5c, 6c) lying in the recesses.

33. Device according to one of claims 13, 19, 24 to 32, characterised in that the free ends of the levers (5, 6) remote from the steering spindle (1) from between them an interval in which there lies or lie a part actuatable by the lock especially one or two eccentrics (11, 12).

34. Device according to one of claims 13, 19, 24 to 33, characterised in that the pivot axis (7, 8) of one lever (5, 6) passes through a curved slot of the other lever (6, 5) in each case.

35. Device according to one of claims 13, 19, 24 to 34, characterised in that in the region of the pivot axis (7, 8) each lever (5, 6) about slidingly on the inner wall of the housing of the device with a zone remote from the zone (5c, 6c) of engagement.

36. Device according to one of claims 1 to 35, characterised in that the lock bolts (5, 6) are springloaded in the engagement direction.

37. Device according to one of claims 1 to 36, characterised in that the flanks or sides (Z) of the projections (3) and the blocking zones (5c, 6c) of the lock bolts (5, 6) lie in planes in which the axis of the steering spindle lies.

38. Device according to one of claims 13, 19, 24 to 37, characterised in that through the pivot axis (7, 8) of the lever (5, 6) there extends a normal (N) which stands on a plane ($M_S$) extending through the steering spindle axis and the blocking zone (5c, 6c) of the lever (5, 6), at an intersection point which is formed by the pitch circle (T) of the projections (3) of the steering spindle (1) with this plane ($M_S$).

39. Device according to one of claims 1 to 38, characterised in that the lock bolts (5, 6) consist each of several metal plates lying with the flat sides on one another, of which zones of the short or end sides form the blocking zones (5c, 6c).

40. Device according to one of claims 1 to 39, characterised in that in relation to the steering spindle (1) the lock bolts (5, 6) are arranged with their longitudinal axes radially.

41. Device according to one of claims 1 to 40, characterised in that the lock bolts (5, 6) are arranged only on one side of the steering spindle (1), especially in an angle zone of $\leq 90°$ each.

**Revendications**

1. Dispositif de blocage de la rotation d'un arbre de direction (1) d'un véhicule automobile avec des pênes de verrouillage (5, 6) actionnés par une serrure et qui, en position de verrouillage, sont logés dans des évidements (4) réguliers de l'arbre de direction, et avec des saillies (3) se trouvant entre les évidements (4) qui forment des surfaces latérales (Z) de blocage pour les pênes de verrouillage (5, 6), caractérisé par le fait que la largeur (b) des évidements (4) est au moins égale à trois fois la largeur (c) des saillies (3), et les pênes de verrouillage (5, 6) ont, dans les zones de verrouillage, un écartement (d) entre eux qui est au moins la largeur (c) d'une saillie (3).

2. Dispositif selon la revendication 1, caractérisé par le fait que les évidements (4) de l'arbre de direction (1) sont des rainures à axes parallèles et les saillies (3) qui se trouvent entre eux sont des nervures à axes parallèles.

3. Dispositif selon la revendication 2, caractérisé par le fait que la distance (d) des faces ($S_3$, $S_4$) tournées l'une vers l'autre des deux pênes de verrouillage (5, 6) dans les zones de verrouillage (5c, 6c) est au moins aussi grande que la distance (c, e) des faces (Z) opposées entre elles d'une ou de deux saillies (3).

4. Dispositif selon la revendication 3, caractérisé par le fait que, dans l'action de verrouillage de deux saillies (3), une saillie (3) supplémentaire ou plusieurs se trouvent entre elles.

5. Dispositif selon la revendication 2, caractérisé par le fait que la distance (d) des faces ($S_3$, $S_4$) tournées l'une vers l'autre des deux pênes de verrouillage (5, 6) dans les zones de verrouillage (5c, 6c) est au moins aussi grande que le multiple par x d'une largeur (c) de saillie plus le multiple par (x-1) de la largeur (b) d'évidement.

6. Dispositif selon l'une des revendications 1 à 5, caractérisé par le fait que la distance (a) entre les faces opposées entre elles des deux pênes de verrouillage (5, 6) dans les zones de verrouillage (5c, 6c) est égale ou inférieure à la largeur (b) d'un évidement (4).

7. Dispositif selon la revendication 6, caractérisé par le fait que la distance (a) des faces ($S_1$, $S_2$) opposées entre elles des deux pênes de verrouillage (5, 6) est égale ou supérieure à la distance (b, $b_1$, $b_2$) des deux faces latérales (Z) tournées l'une vers l'autre de deux saillies (3).

8. Dispositif selon la revendication 7, caractérisé par le fait que, entre les saillies (3) dont les faces latérales ($S_3$, $S_4$) tournées l'une vers l'autre ont une action de blocage, se trouvent une ou plusieurs saillies.

9. Dispositif selon la revendication 7 ou 8, caractérisé par le fait que la distance (a) des faces ($S_1$, $S_2$) opposées l'une à l'autre des deux pênes de verrouillage (5, 6) est égale ou pas supérieure ou multiple par x de la largeur (b) d'évidement plus le multiple par (x-1) de la largeur (c) de saillie.

10. Dispositif selon l'une des revendications 1 à 9, caractérisé par le fait que la zone de verrouillage (5c, 6c) de chaque pêne de verrouillage (5, 6) présente sensiblement la même largeur (g) que la largeur (c) de chaque saillie (3).

11. Dispositif selon l'une des revendications 1 à 10, caractérisé par le fait que plus de deux pênes de verrouillage (5, 6) sont disposés qui viennent en prise dans les évidements (4) de l'arbre de direction (1).

12. Dispositif selon l'une des revendications 1 à 11, caractérisé par le fait que les évidements (4) et les saillies (3) de l'arbre de direction (1) sont formés par une bague ou douille (2) fixée sur l'arbre de direction.

13. Dispositif selon l'une des revendications 1 à 12, caractérisé par le fait que les pênes de verrouillage (5, 6) pénétrant dans les évidements (4) de l'arbre de direction (1) sont formés par des goujons ou des leviers.

14. Dispositif selon la revendication 13, caractérisé par le fait que les goujons (5, 6) coulissant longitudinalement sont montés radialement à l'arbre de direction (1) et viennent en prise entre les saillies (3) faisant saillie de l'arbre de direction.

15. Dispositif selon la revendication 13, caractérisé par le fait que les goujons (5, 6) coulissant longitudinalement sont montés à axe parallèle et tout prés de l'arbre de direction (1).

16. Dispositif selon la revendication 15, caractérisé par le fait que les goujons (5, 6) à axes parallèles viennent en prise dans des évidements (4) de la face frontale d'une douille (2) ou bague fixée sur l'arbre de direction (1).

17. Dispositif selon la revendication 15, caractérisé par le fait qu'une douille (2) ou bague fixée sur l'arbre de direction (1) présente des ouvertures en tant qu'évidements (4), qui traversent la douille ou la bague à axes parallèles, dans lesquelles les goujons (5, 6) peuvent être enfoncés.

18. Dispositif selon l'une des revendications 13 à 17, caractérisé par le fait que les goujons (5, 6) forment, seulement dans les zones de verrouillage (5c, 6c), une distance (d) entre eux d'au moins la largeur (c) d'une saillie (3) et sont adjacents l'une à l'autre sur au moins une grande partie de la longeur restante.

19. Dispositif selon l'une des revendications 1 à 18, caractérisé par le fait que les pênes de verrouillage (5, 6) peuvent être actionnés par la serrure par un ou plusieurs excentriques (11, 12) ou portions de cames.

20. Dispositif selon l'une des revendications 13 à 19, caractérisé par le fait que des chevilles (17, 18) font saillie orthogonalement aux goujons ou aux leviers, et peuvent être actionnées par un excentrique (11) ou une portion de came.

21. Dispositif selon l'une des revendications 13 à 19, caractérisé par le fait que les goujons (5, 6) sont des tiges à axes parallèles dont la profondeur radiale (t) est inférieure à leur longueur (1).

22. Dispositif selon la revendication 21, caractérisé par le fait que la largeur (P) des tiges (5, 6) est inférieure à leur profondeur radiale (t).

23. Dispositif selon la revendication 21 ou 23, caractérisé par le fait que les tiges (5, 6), à une extrémité, sont fixées à, en particulier formées avec, une bague ou un secteur annulaire (21) entourant coaxialement l'arbre de direction (1).

24. Dispositif selon l'une des revendications 21 à 23, caractérisé par le fait que les tiges (5, 6) sont pivotantes, en particulier à und extrémité, en tant que leviers, l'axe de pivotement étant parallèle à une tangente à la périphérie de l'arbre de direction.

25. Dispositif selon la revendication 13, 19 ou 24, caractérisé par le fait que les axes de pivotement (7, 8) des leviers (5, 6) sont à axes parallèles avec l'arbre de direction (1).

26. Dispositif selon la revendication 13, 19 ou 24, caractérisé par le fait que les leviers (5, 6) sont légèrement en saillie radialement par rapport à l'arbre de direction (1).

27. Dispositif selon la revendication 13, 19, 24 à 26, caractérisé par le fait que les extrémités de levier tournées vers l'arbre de direction (1) pénètrent entre des saillies (3) faisant saillie de l'arbre de direction.

28. Dispositif selon l'une des revendications 13, 19, 24 à 27, caractérisé par le fait que les leviers (5, 6) sont à deux bras.

29. Dispositif selon la revendication 28, caractérisé par le fait que les leviers (5, 6) sont en forme de genouillère.

30. Dispositif selon l'une des revendications 13, 19, 24 à 29, caractérisé par le fait que les leviers (5, 6) sont en forme de Z.

31. Dispositif selon l'une des revendications 13, 19, 24 à 30, caractérisé par le fait que les leviers (5, 6) sont adjacents par leurs faces latérales planes dans la zone des axes de pivotement (7, 8).

32. Dispositif selon l'une des revendications 13, 19, 24 à 31, caractérisé par le fait que les extrémités libres des leviers (5, 6) tournées vers l'arbre de direction (1) forment les zones de verrouillage (5c, 6c) logées dans les évidements.

33. Dispositif selon l'une des revendications 13, 19, 24 à 32, caractérisé par le fait que les extrémités libres des leviers (5, 6) opposées à l'arbre de direction (1) forment entre elles un espace dans lequel est logée une pièce pouvant être actionnée par la serrure, en particulier un ou deux excentriques (11, 12).

34. Dispositif selon l'une des revendications 13, 19, 24 à 33, caractérisé par le fait que l'axe de pivotement (7, 8) d'un levier s'étend à travers d'un trou allongé courbe de l'autre levier (5, 6).

35. Dispositif selon l'une des revendications 13, 19, 24 à 34, caractérisé par le fait que, dans la zone de l'axe de pivotement (7, 8), chaque levier est adjacent coulissant à la paroi intérieure du dispositif par une zone oposée à la zone de pénétration (5c, 6c).

36. Dispositif selon l'une des revendications 1 à 35, caractérisé par le fait que les pênes de verrouillage (5, 6) sont rappelés par ressort en direction de prise.

37. Dispositif selon l'une des revendications 1 à 36, caractérisé par le fait que les flancs ou faces (Z) des saillies (3) et les zones de verrouillage (5c, 6c) des pênes de verrouillage (5, 6) sont dans des plans dans lesquels se trouve l'axe de l'arbre de direction.

38. Dispositif selon l'une des revendications 13, 19, 24 à 37, caractérisé par le fait qu'une normale (N) passant par l'axe de pivotement (7, 8) du levier (5, 6) se trouve dans un plan ($M_S$) passant par l'axe de l'arbre de direction et la zone de verrouillage (5c, 6c) du levier (5, 6), à un point de jonction qui forme le cercle primitif (T) des saillies (3) de l'arbre de direction (1) avec ce plan ($M_S$).

39. Dispositif selon l'une des revendications 1 à 38, caractérisé par le fait que les pênes de verrouillage (5, 6) sont chacun constitués de plusieurs tôles adjacentes entre elles par leurs faces planes, dont les zones des faces étroites ou frontales forment les zones de verrouillage (5c, 6c).

40. Dispositif selon l'une des revendications 1 à 39, caractérisé par le fait que les pênes de verrouillage (5,6) sont disposés avec leur axe longitudinal radial par rapport à l'arbre de direction (1).

41. Dispositif selon l'une des revendications 1 à 40, caractérisé par le fait que les pênes de verrouillage (5, 6) ne sont disposés que d'un côté de l'arbre de direction (1), en particulier dans une zone angulaire ≤ 90 degrés à chaque fois.

Fig.1

Fig.2

0105297

Fig.3

Fig.4

Fig.5

Fig.6

13

Fig.7

Fig.8

Fig.9

Fig.10

## Fig.11

## Fig.12

Fig.13

Fig.14